# EUROPEAN PATENT APPLICATION

(11) **EP 4 318 906 A1**
(43) Date of publication of application: **07.02.2024**
(21) Application number: 21932087.6
(22) Date of filing: 23.03.2021
(51) Int. Cl.: H02M 1/36, H02M 1/32

(54) **SOFT START CIRCUIT AND CONVERTER**

(71) Applicant: Huawei Digital Power Technologies Co., Ltd., Shenzhen, Guangdong 518043 (CN)
(72) Inventor: PANG, Jinyong, Shenzhen, Guangdong 518129 (CN); LIU, Yang, Shenzhen, Guangdong 518129 (CN); JIANG, Zhenting, Shenzhen, Guangdong 518129 (CN); HU, Biao, Shenzhen, Guangdong 518129 (CN)
(74) Representative: Maiwald GmbH
(86) International application number: PCT/CN2021/082456
(87) International publication number: WO 2022/198456

(57) **Abstract**

A soft start circuit and a converter are provided, to reduce a quantity of components in the soft start circuit and reduce costs and the volume. The soft start circuit is located between a rectifier circuit and a bus capacitor, and is used to implement soft starting of the rectifier circuit. The soft start circuit includes a switching tube and a relay. The relay is connected in parallel to the switching tube. The relay is in a turned-off state before the rectifier circuit is powered on. After the rectifier circuit is powered on and a voltage value of the bus capacitor reaches a preset voltage value, the relay is turned on.

## Description

### TECHNICAL FIELD

This application relates to the field of power technologies, and in particular, to a soft start circuit and a converter.

### BACKGROUND

As an alternating current (alternating current, AC)/direct current (direct current, DC) converter, a rectifier circuit is widely used in many scenarios. For example, a direct current charging pile may include a rectifier circuit to rectify an alternating current output by a grid to obtain a direct current, so that a power battery is charged. For another example, an on-board charger (on-board charger, OBC) may also include a rectifier circuit to convert an input alternating current into a direct current, so that a power battery is charged. In addition, a data center and a telecom power supply also include an AC/DC converter.

In an example of a rectifier circuit, to be specific, a power factor correction (power factor correction, PFC) circuit of the direct current charging pile, an input side of the PFC circuit is connected to the grid, for example, may be connected to an alternating current grid of 380 V. Before the PFC circuit is powered on, a voltage of a bus capacitor is 0. After the PFC circuit is powered on, the bus capacitor is impacted by the grid, which is prone to cause component damage. Therefore, in actual application, a soft start circuit is generally configured for the PFC circuit, to prevent a large inrush current from occurring during power-on.

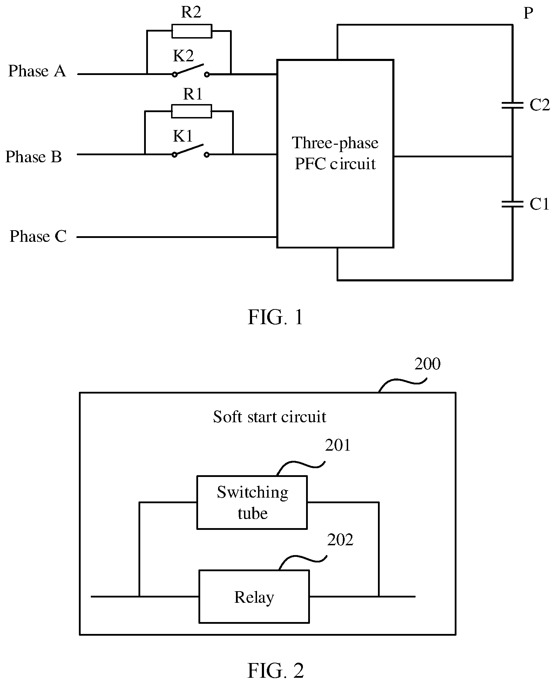

A soft start circuit provided in a conventional technology may be shown in FIG. 1. In an example in which the soft start circuit is used in a three-phase PFC circuit, the soft start circuit includes a resistor R1 and a relay K1 that are connected in parallel, and a resistor R2 and a relay K2 that are connected in parallel. R1 and K1 are connected in series in a phase A, R2 and K2 are connected in series in a phase B, and C1 and C2 are bus capacitors. In an initial status, to be specific, before the PFC circuit is powered on, K1 and K2 are in a turned-off state, and voltages on the bus capacitors C1 and C2 are both 0. After the PFC circuit is powered on, the resistors R1 and R2 in an input loop may limit an input current, to prevent a large current in a grid from impacting C1 and C2. An alternating current output by the grid charges C1 and C2 via R1 and R2. When the voltages of the bus capacitors reach a specified value, an auxiliary power supply operates (the auxiliary power supply may take power at a connection point P between C2 and a positive busbar, and when C2 is charged to a specified voltage value, the auxiliary power supply is started). After operating, the auxiliary power supply is capable of supplying power to a control circuit, so that the control circuit controls statuses of K1 and K2. When the control circuit detects that the voltages of the bus capacitors reach a preset rectified voltage value, the control circuit controls K1 and K2 to be turned on, and the PFC circuit operates normally. Soft starting can be implemented through the foregoing manner.

In a solution provided in the conventional technology, the soft start circuit includes two relays and two resistors, and requires a large quantity of components, which affects costs and the volume of the soft start circuit.

### SUMMARY

Embodiments of this application provide a soft start circuit and a converter that are used to reduce a quantity of components in the soft start circuit, to reduce costs and the volume.

According to a first aspect, an embodiment of this application provides a soft start circuit. The soft start circuit is located between a rectifier circuit and a bus capacitor, and is used to implement soft starting of the rectifier circuit. The soft start circuit includes a switching tube and a relay. The relay is connected in parallel to the switching tube. The relay is in a turned-off state before the rectifier circuit is powered on. After the rectifier circuit is powered on and a voltage value of the bus capacitor reaches a preset voltage value, the relay is turned on.

The switching tube may be a metal-oxide-semiconductor field-effect transistor MOSFET, an insulated gate bipolar transistor IGBT, or a triode. The relay may be an alternating current relay, a direct current relay, or a contactor.

According to the soft start circuit provided in the first aspect, before the rectifier circuit is powered on, the switching tube and the relay are in the turned-off state by default, and voltages of bus capacitors are 0. After the rectifier circuit is powered on, an input current of the rectifier circuit charges the bus capacitors via the switching tube. In actual application, a control signal of the switching tube enables the switching tube to be in a high-resistance state. Therefore, when the bus capacitors are charged, a current flowing through the bus capacitors is not excessively large, so that the bus capacitors are not damaged due to an inrush from a grid. When the voltages of the bus capacitors reach the preset voltage value, the relay is turned on, and the switching tube is bypassed, so that the soft starting of the rectifier circuit is implemented. The preset voltage value of the bus capacitors may be a rated output voltage value of the rectifier circuit, to be specific, a rectified value of the rectifier circuit. According to the soft start circuit provided in the first aspect, the soft starting of the rectifier circuit can be implemented by using only two components: the switching tube and the relay. Compared with the solution in a conventional technology, the soft start circuit requires fewer components, so that costs and the volume of the soft start circuit are reduced.

In a possible design, the soft start circuit is located between the rectifier circuit and the bus capacitor. A specific implementation may be as follows: 1. The soft start circuit is located on a positive busbar. 2. The soft start circuit is located on a negative busbar. 3. The soft start circuit is connected in series to the bus capacitor.

In a possible design, the rectifier circuit may be any one of the following: a three-phase three-level power factor correction PFC circuit, a three-phase two-level PFC circuit, and a single-phase PFC circuit.

In addition, the soft start circuit provided in the first aspect may further include a resistor. The resistor is connected in series to the switching tube, and is configured to perform current limiting on the switching tube.

According to the foregoing solution, when the rectifier circuit is started, a current flowing through the switching tube can be further reduced.

In a possible design, the control signal of the switching tube is a pulse width modulation PWM wave.

According to the foregoing solution, the control signal of the switching tube is configured to enable the switching tube to be in the high-resistance state. The switching tube is controlled through the PWM wave, so that the switching tube can be alternately turned on and off and be in the high-resistance state to limit the current.

In a possible design, a control circuit controls turning-on of the relay.

According to the foregoing solution, after the rectifier circuit is started, the relay can be turned on through the control circuit.

Further, the control circuit can be powered by an auxiliary power supply, and the auxiliary power supply takes power at an input end of the rectifier circuit.

According to the foregoing solution, when the rectifier circuit is powered on, a voltage at a power taking point of the auxiliary power supply increases rapidly and reaches a startup voltage of the auxiliary power supply, so that the auxiliary power supply is started. After being started, the auxiliary power supply is capable of converting an input voltage into an operating voltage of the control circuit, to supply power to the control circuit. After being started, the control circuit is capable of controlling the control signal of the switching tube, to perform current limiting on a branch of the switching tube.

According to a second aspect, an embodiment of this application provides a converter. The converter includes a rectifier circuit and the soft start circuit that is provided in any one of the first aspect or possible designs of the first aspect. The soft start circuit is used to implement soft starting of the rectifier circuit. The rectifier circuit is used to rectify an input alternating current to obtain a direct current.

In addition, it should be understood that for technical effects brought by any one of the second aspect or possible design manners of the second aspect, reference can be made to technical effects brought by the different design manners in the first aspect. Details are not described herein again.

### BRIEF DESCRIPTION OF DRAWINGS

FIG. 1 is a schematic diagram of a structure of a soft start circuit according to a conventional technology;
FIG. 2 is a schematic diagram of a structure of a first soft start circuit according to an embodiment of this application;
FIG. 3 is a schematic diagram of a structure of a second soft start circuit according to an embodiment of this application;
FIG. 4 is a schematic diagram of a structure of a third soft start circuit according to an embodiment of this application;
FIG. 5 is a schematic diagram of a structure of a fourth soft start circuit according to an embodiment of this application;
FIG. 6 is a schematic diagram of a structure of a fifth soft start circuit according to an embodiment of this application;
FIG. 7 is a schematic diagram of a structure of a sixth soft start circuit according to an embodiment of this application;
FIG. 8 is a schematic diagram of a structure of a seventh soft start circuit according to an embodiment of this application;
FIG. 9 is a schematic diagram of a structure of an eighth soft start circuit according to an embodiment of this application; and
FIG. 10 is a schematic diagram of a structure of a converter according to an embodiment of this application.

### DESCRIPTION OF EMBODIMENTS

The following further describes in detail embodiments of this application with reference to accompanying drawings.

It should be noted that "a plurality of" in embodiments of this application means two or more than two. In addition, in the descriptions of this application, terms such as "first" and "second" are merely used for distinction and description, and shall not be understood as an indication or implication of relative importance or an indication or implication of an order. "Coupling" mentioned in embodiments of this application means an electrical connection, and may specifically include two manners: a direct connection and an indirect connection.

An embodiment of this application provides a soft start circuit. The soft start circuit is located between a rectifier circuit and a bus capacitor, and is used to implement soft starting of the rectifier circuit. As shown in FIG. 2, a soft start circuit 200 includes a switching tube 201 and a relay 202. The relay 202 is connected in parallel to the switching tube 201. The relay 202 is in a turned-off state before a rectifier circuit is powered on. After the rectifier circuit is powered on and a voltage value of a bus capacitor reaches a preset voltage value, the relay 202 is turned on.

In actual application, the switching tube 201 may be, for example, a metal-oxide-semiconductor field-effect transistor (metal-oxide-semiconductor field-effect transistor, MOSFET), a gallium nitride (gallium nitride, GaN) transistor, an insulated gate bipolar transistor (insulated gate bipolar transistor, IGBT), a bipolar junction transistor (bipolar junction transistor, BJT), or a triode. The relay 202 may be, for example, an alternating current relay, a direct current relay, or a contactor.

In addition, a specific structure of the rectifier circuit is not limited in this embodiment of this application. The rectifier circuit may be a three-phase three-level PFC circuit, a three-phase two-level PFC circuit, or a single-phase PFC circuit. The specific structure of the foregoing rectifier circuit belongs to a conventional technology, and details are not described in this embodiment of this application.

In this embodiment of this application, the soft start circuit 200 is located between the rectifier circuit and the bus capacitor. Specifically, the soft start circuit 200 may be located on a positive busbar, be located on a negative busbar, or be connected in series to the bus capacitor.

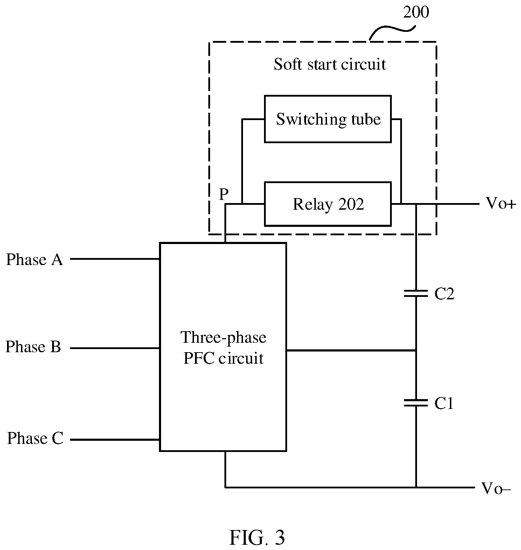

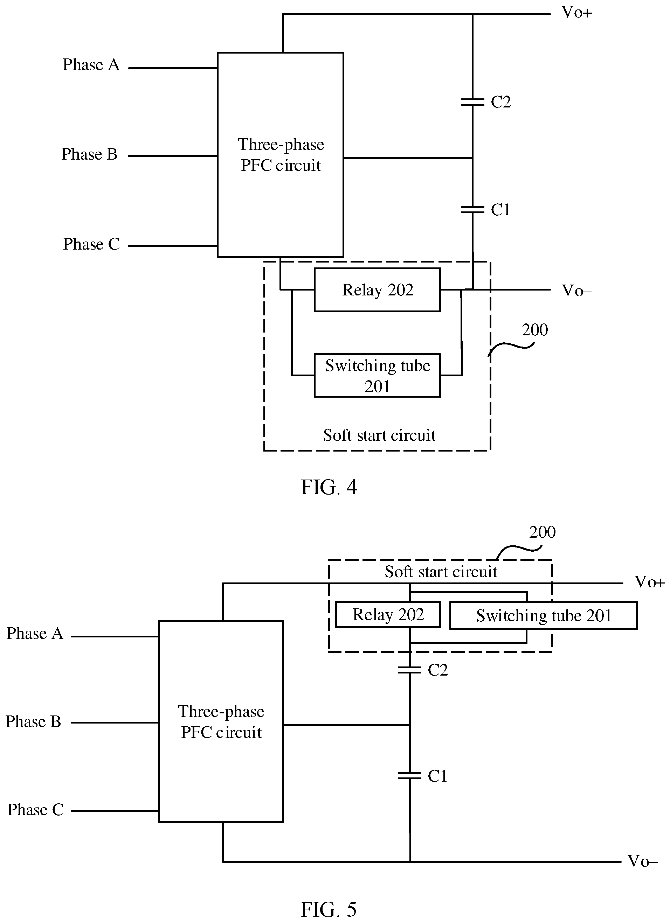

For example, the rectifier circuit is the three-phase three-level PFC circuit shown in FIG. 1. In an example shown in FIG. 3, the soft start circuit 200 is located on a positive busbar. In an example shown in FIG. 4, the soft start circuit 200 is located on a negative busbar. In an example shown in FIG. 5, the soft start circuit 200 is connected in series to a bus capacitor. In addition, in the example shown in FIG. 5, the soft start circuit 200 is connected in series to a bus capacitor C2. In another possible design, the soft start circuit 200 may alternatively be connected in series to a bus capacitor C1.

If the soft start circuit 200 is connected in series to the bus capacitor, a current flowing through the relay 202 is only a ripple current on the bus capacitor. A relay with a small current specification can be selected as the relay 202.

The following takes FIG. 3 as an example to describe an operating principle of the soft start circuit 200. Before the rectifier circuit (that is, the three-phase PFC circuit in FIG. 3) is powered on, the switching tube 201 and the relay 202 are in the turned-off state by default, and voltages on the bus capacitors C1 and C2 are both 0. After the rectifier circuit is powered on, an input current of the rectifier circuit charges the bus capacitors C1 and C2 via the switching tube 201. In actual application, a control signal of the switching tube 201 enables the switching tube 201 to be in a high-resistance state. Therefore, when C1 and C2 are charged, a current flowing through C1 and C2 is not excessively large, so that the bus capacitors are not damaged due to an inrush from a grid. When the voltages of the bus capacitors C1 and C2 reach the preset voltage value, the relay 202 is turned on, and the switching tube 201 is bypassed, so that the soft starting of the rectifier circuit is implemented. The preset voltage value of the bus capacitors may be a rated output voltage value of the rectifier circuit, to be specific, a rectified value of the rectifier circuit.

According to the soft start circuit 200 provided in this embodiment of this application, the soft starting of the rectifier circuit can be implemented by using only two components: the switching tube 201 and the relay 202. Compared with the solution in a conventional technology, the soft start circuit 200 requires fewer components, so that costs and the volume of the soft start circuit 200 are reduced.

In addition, in the conventional technology shown in FIG. 1, resistors need to be configured in the soft start circuit. The resistor is connected in series to a phase line. When the rectifier circuit is powered on, the resistor is required to withstand a large current inrush. Therefore, the resistor is a cement resistor. The volume of the cement resistor is large, which also increases the volume of the soft start circuit to a certain extent. However, in this embodiment of this application, the switching tube 201 is controlled through the control signal of the switching tube 201, so that the switching tube is in the high-resistance state to limit a current. The volume of the switching tube 201 is far less than the volume of the cement resistor. Therefore, the volume of the soft start circuit 200 can be further reduced.

As described above, in this embodiment of this application, the control signal of the switching tube 201 is configured to enable the switching tube 201 to be in the high-resistance state. The control signal of the switching tube 201 is input from a control end of the switching tube 201. For example, when the switching tube 201 is the MOSFET, the control end of the switching tube 201 is a gate of the MOSFET. Specifically, the control signal of the switching tube 201 may be a pulse width modulation (pulse width modulation, PWM) wave. The PWM wave may be considered as a square wave with an adjustable duty cycle. The switching tube 201 is controlled through the PWM wave, so that the switching tube 201 can be alternately turned on and off and be in the high-resistance state to limit the current.

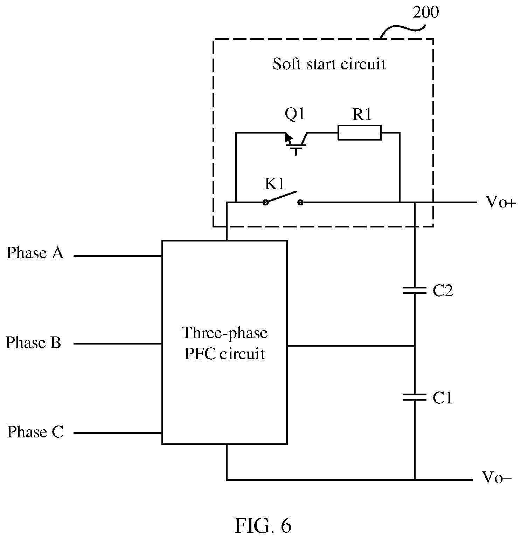

In another implementation, a resistor may alternatively be connected in parallel to a branch of the switching tube 201. Current limiting is performed on the switching tube 201 through the resistor. The example shown in FIG. 3 is still taken as an example. After the resistor is connected in parallel to the branch of the switching tube 201, a structure of the soft start circuit 200 may be shown in FIG. 6. In FIG. 6, Q1 represents the switching tube, K1 represents the relay, and R1 represents the resistor.

The current limiting is implemented through a manner of connecting the resistor in parallel, so that a current flowing through the switching tube 201 can be further reduced.

After the resistor is connected in parallel, the switching tube 201 may still use the PWM wave as the control signal. Alternatively, in another implementation, the switching tube may not use the PWM wave as the control signal. The switching tube 201 is in a turned-on state before the rectifier circuit is powered on. After the rectifier circuit is powered on, an input circuit charges the bus capacitors via the resistor R1. After the voltages of the bus capacitors reach the preset voltage value, the switching tube 201 is turned off, K1 is turned on, and the rectifier circuit operates normally. In this control manner, a difficulty of controlling the switching tube 201 can be reduced.

In this embodiment of this application, to implement soft starting of the rectifier circuit, turning-off and turning-on of the relay 202 need to be controlled, and an input signal (the control signal) of the switching tube 201 also needs to be controlled. Specifically, the turning-off and the turning-on of the relay 202 and the control signal of the switching tube 201 can be controlled through the control circuit.

In actual application, the control circuit can be powered by an auxiliary power supply, and the auxiliary power supply can take power at an input end of the rectifier circuit. For example, a topology shown in FIG. 3 is still taken as an example, and the auxiliary power supply can take power at a point P in FIG. 3. Therefore, when the rectifier circuit is powered on, a voltage of a power taking point of the auxiliary power supply increases rapidly and reaches a startup voltage of the auxiliary power supply, so that the auxiliary power supply is started. After being started, the auxiliary power supply is capable of converting an input voltage into an operating voltage of the control circuit, to supply power to the control circuit. After being started, the control circuit is capable of controlling the input signal (the control signal) of the switching tube 201, to perform current limiting on the branch of the switching tube 201. After the voltages of the bus capacitors reach the preset voltage value, the control circuit controls the relay 202 to be turned on.

In the conventional technology shown in FIG. 1, the control circuit controls the relay to be turned on after the bus capacitors are charged to a rectified voltage value. Therefore, before the relay is turned on, the control circuit is not actually involved in a soft start process of the rectifier circuit. This embodiment of this application differs from the conventional technology shown in FIG. 1 in that in a process of implementing the soft starting, the control circuit is required to control the control signal of the switching tube 201. Therefore, compared with the conventional technology shown in FIG. 1, this embodiment of this application relates to arranging the power taking point of the auxiliary power supply in the front, so that the auxiliary power supply can be started after the rectifier circuit is powered on. The control circuit is triggered to operate normally to control the control signal of the switching tube 201, so that the soft starting is implemented.

As described above, in this embodiment of this application, the rectifier circuit may be a three-phase three-level PFC circuit, a three-phase two-level PFC circuit, or a single-phase PFC circuit. The foregoing examples are described by taking an example in which the rectifier circuit uses a three-phase three-level PFC circuit topology. The following further lists scenarios in which the rectifier circuit uses the three-phase two-level PFC circuit topology and a single-phase PFC circuit topology.

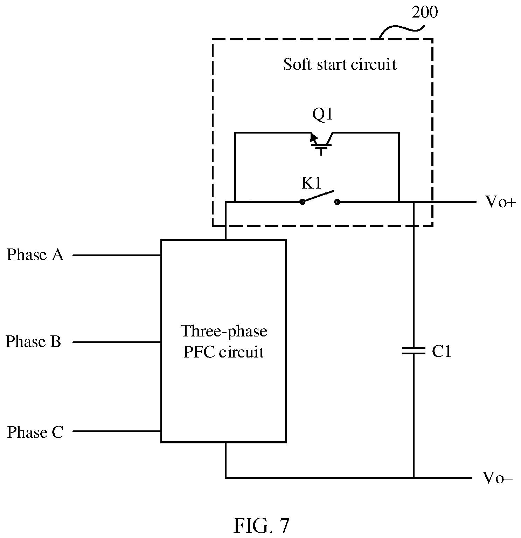

When the rectifier circuit uses the three-phase two-level PFC circuit topology, the soft start circuit 200 provided in this embodiment of this application may be shown in FIG. 7. In an example shown in FIG. 7, Q1 represents the switching tube 201, and K1 represents the relay 202.

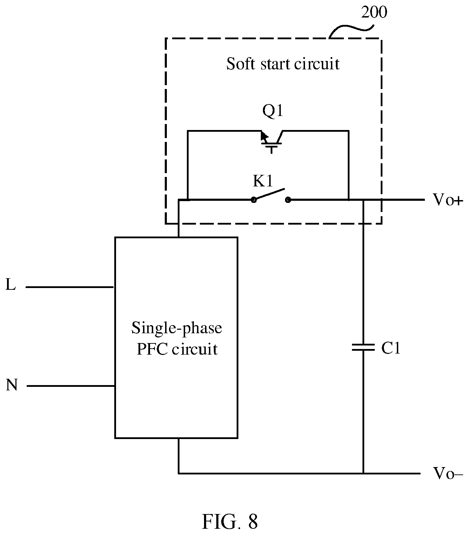

When the rectifier circuit uses the single-phase PFC circuit topology, the soft start circuit 200 provided in this embodiment of this application may be shown in FIG. 8. In an example shown in FIG. 8, Q1 represents the switching tube 201, and K1 represents the relay 202.

For operating principles of the soft start circuits 200 shown in FIG. 7 and FIG. 8, reference can be made to the foregoing description. Details are not described herein again.

In conclusion, according to the soft start circuit 200 provided in this embodiment of this application, the soft starting of the rectifier circuit can be implemented by using only two components: the switching tube 201 and the relay 202. Compared with the solution in a conventional technology, the soft start circuit 200 requires fewer components, so that costs and the volume of the soft start circuit 200 are reduced. In addition, in this embodiment of this application, the switching tube 201 is controlled through the control signal of the switching tube 201, so that the switching tube 201 is in the high-resistance state to limit a current. When this embodiment of this application is compared with a solution in which the cement resistor is used to limit the current in a conventional technology, the volume of the switching tube 201 is far less than the volume of the cement resistor. Therefore, the volume of the soft start circuit 200 can be further reduced.

It should be noted that the soft start circuit 200 provided in this embodiment of this application may be applied to a plurality of scenarios in which the rectifier circuit is configured, to implement the soft starting of the rectifier circuit. An application scenario of the soft start circuit 200 is not specifically limited in embodiments of this application. For example, the soft start circuit 200 can be applied to entities such as a direct current charging pile, an OBC, a data center, or a telecom power supply.

For example, when the soft start circuit 200 is applied to the direct current charging pile, the direct current charging pile may include a plurality of conversion modules. Each conversion module includes the rectifier circuit and a conversion circuit. The rectifier circuit is used to rectify an input alternating current (mains electricity) to obtain a first direct current. The conversion circuit is used to perform DC/DC conversion on the first direct current to obtain a second direct current. The second direct current charges a power battery. In addition, each conversion module further includes the soft start circuit 200. The soft start circuit 200 is located between a direct current busbar and a bus capacitor, and is used to implement the soft starting of the rectifier circuit.

For another example, when the soft start circuit 200 is applied to the OBC, the OBC may include a plurality of conversion modules. Each conversion module includes the rectifier circuit and a conversion circuit. The rectifier circuit is used to rectify an alternating current output by an alternating current charging pile to obtain a first direct current. The conversion circuit is used to perform DC/DC conversion on the first direct current to obtain a second direct current. The second direct current charges a power battery. In addition, each conversion module further includes the soft start circuit 200. The soft start circuit 200 is located between a direct current busbar and a bus capacitor, and is used to implement the soft starting of the rectifier circuit.

The following describes, by using a specific example, a specific operating process of the soft start circuit provided in this embodiment of this application.

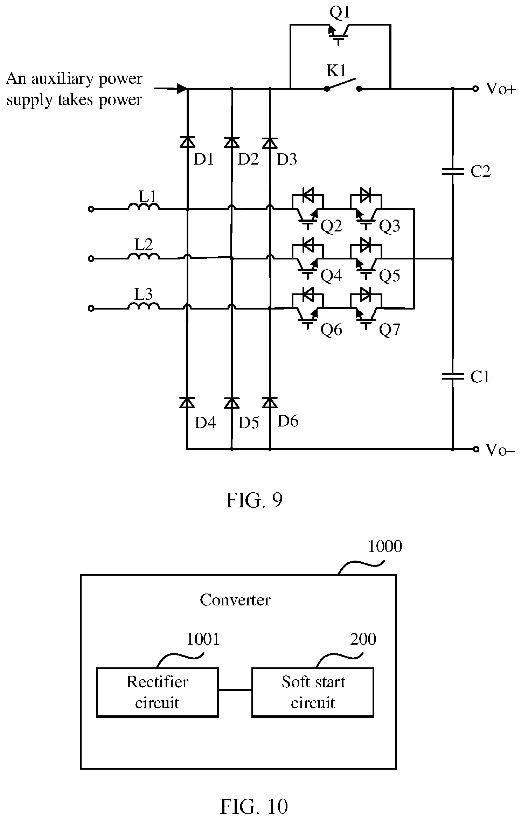

As shown in FIG. 9, in an example in which the rectifier circuit uses a Vienna circuit topology, the soft start circuit provided in this embodiment of this application may be disposed on a positive busbar. The soft start circuit includes a switching tube Q1 and a relay K1 that are connected in parallel.

Before a three-phase voltage is connected, both K1 and Q1 are in a turned-off state, and voltages on bus capacitors C1 and C2 are both 0. After the three-phase voltage is connected, an auxiliary power supply operates to supply power to a control circuit. The control circuit outputs a PWM wave to Q1 to limit a current of Q1. The bus capacitors C1 and C2 are charged through Q 1 using a voltage obtained after rectifying an alternating current. After voltage values of the bus capacitors reach a rectified value of an input voltage, K1 is turned on, Q1 is bypassed, and Q1 is turned off, so that an effect of soft starting is achieved.

An embodiment of this application further provides a converter. As shown in FIG. 10, a converter 1000 includes a rectifier circuit 1001 and the foregoing soft start circuit 200. The soft start circuit 200 is used to implement soft starting of the rectifier circuit 1001. The rectifier circuit 1001 is used to rectify an input alternating current to obtain a direct current.

It should be noted that, for implementations and technical effects that are of the converter 1000 and that are not described in detail, reference can be made to related descriptions of the soft start circuit 200. Details are not described herein again.

It is clear that a person skilled in the art can make various modifications and variations to embodiments of this application without departing from the scope of embodiments of this application. This application is intended to cover these modifications and variations provided that they fall within the scope of protection defined by the following claims and their equivalent technologies.

## Claims

1. A soft start circuit, wherein the soft start circuit is located between a rectifier circuit and a bus capacitor, and is used to implement soft starting of the rectifier circuit, and the soft start circuit comprises:
a switching tube; and
a relay, wherein the relay is connected in parallel to the switching tube, the relay is in a turned-off state before the rectifier circuit is powered on, and after the rectifier circuit is powered on and a voltage value of the bus capacitor reaches a preset voltage value, the relay is turned on.

2. The circuit according to claim 1, wherein after the rectifier circuit is powered on, an input current of the rectifier circuit charges the bus capacitor via the switching tube.

3. The circuit according to claim 1 or 2, wherein the soft start circuit is located on a positive busbar; the soft start circuit is located on a negative busbar; or the soft start circuit is connected in series to the bus capacitor.

4. The circuit according to any one of claims 1 to 3, wherein the rectifier circuit is any one of the following:
a three-phase three-level power factor correction PFC circuit;
a three-phase two-level PFC circuit; and
a single-phase PFC circuit.

5. The circuit according to any one of claims 1 to 4, further comprising:
a resistor, wherein the resistor is connected in series to the switching tube and is configured to perform current limiting on the switching tube.

6. The circuit according to any one of claims 1 to 5, wherein a control signal of the switching tube is a pulse width modulation PWM wave.

7. The circuit according to any one of claims 1 to 6, wherein the switching tube is a metal-oxide-semiconductor field-effect transistor MOSFET, an insulated gate bipolar transistor IGBT, or a triode.

8. The circuit according to any one of claims 1 to 7, wherein the relay is an alternating current relay, a direct current relay, or a contactor.

9. The circuit according to any one of claims 1 to 8, wherein a control circuit controls turning-on of the relay.

10. The circuit according to claim 9, wherein the control circuit is powered by an auxiliary power supply, and the auxiliary power supply takes power at an input end of the rectifier circuit.

11. A converter, comprising a rectifier circuit and the soft start circuit according to any one of claims 1 to 10, wherein the soft start circuit is used to implement soft starting of the rectifier circuit, and the rectifier circuit is used to rectify an input alternating current to obtain a direct current.
